# EUROPÄISCHE PATENTSCHRIFT

(11) **EP 1 484 096 B1**
(45) Veröffentlichungstag und Bekanntmachung des Hinweises auf die Patenterteilung: **02.03.2011**
(21) Anmeldenummer: 04012567.6
(22) Anmeldetag: 27.05.2004
(51) Int. Cl.: B01D 29/66

(54) **Rückspülfilter**
Backwash filter
Filtre à lavage à contre-courant

(30) Priorität: 04.06.2003 DE 10325525
(43) Veröffentlichungstag der Anmeldung: 08.12.2004
(73) Patentinhaber: Boll & Kirch Filterbau GmbH, 50170 Kerpen (DE)
(72) Erfinder: Lennartz, Rüdiger, 50259 Pulheim (DE); Sindorf, Heinz, 41569 Romerskirchen (DE); Rott, Willi, 53332 Bornheim (DE)
(74) Vertreter: Hennicke, Ernst Rüdiger

(56) Entgegenhaltungen:
- EP-A- 0 361 217
- DE-A- 19 734 588

## Beschreibung

Die Erfindung betrifft einen Rückspülfilter mit mehreren Filterkammern, die Filtereinsätze aufnehmen, die mittels druckgasbeaufschlagten Spülfiltrats rückspülbar sind, mit einem Filtergehäuse, einem im Gehäuse drehbar um eine Drehachse gelagerten Rückspülorgan, das einen Filtrat-Anschlußstutzen und einen Schlamm-Abzugsstutzen aufweist, wobei zur Rückspülung der Filtrat-Anschlußstutzen in Flüssigkeitsverbindung mit einem Filtratraum von jeweils einer der konzentrisch um die Drehachse herum angeordneten Filterkammern und gleichzeitig der Schlamm-Abzugsstutzen in Verbindung mit einem Trüberaum der jeweils einen Filterkammer bringbar ist, ferner mit einem Druckspeicher für Spülgas und einem diesen zum Filtrat-Anschlußstutzen absperrenden bzw. freigebenden Spülventil sowie mit einem Schlammauslaß und einem diesen zum Schlamm-Abzugsstutzen absperrenden bzw. freigebenden Schlamm-Ablaßventil.

Ein derartiger Rückspülfilter ist beispielsweise aus der EP 0 361 217 B1 bekannt. Dieser bekannte Rückspülfilter ist in seinem Aufbau vergleichsweise kompliziert, insbesondere besitzt er eine verhältnismäßig große Bauhöhe, was unter anderem darauf zurückzuführen ist, daß das Schlamm-Ablaßventil und der dieses betätigende Antrieb unten am eigentlichen Filtergehäuse angeflanscht ist, während das Spülventil mit seinem zugehörigen Antrieb oben vom Filtergehäuse aufragt. Die Verwendung zweier separater Antriebe für das Schlamm-Abzugsventil und das Spülventil macht es erforderlich, für diese beiden Ventile eine Folgesteuerung vorzusehen, die dafür sorgt, daß das Spülventil erst nach dem Öffnen des Schlamm-Ablaßventils geöffnet wird, damit zu Beginn der Rückspülung der Flüssigkeitsdruck auf der Schmutzseite der Filtereinsätze abgebaut ist, bevor der Rückspülvorgang eingeleitet wird. Bei einem Versagen dieser Folgesteuerung ist eine ordnungsgemäße Abreinigung der Filtereinsätze nicht gewährleistet, was unter Umständen über längere Betriebszeit des Rückspülfilters unbemerkt bleiben kann.

Aus der dem Oberbegriff von Anspruch 1 zugrundeliegenden DE 197 34 588 A1 der Anmelderin ist bekannt, bei einem Rückspülfilter die Filtereinsätze stehend in einem Filterkerzenträger anzuordnen, der mittels eines Stellantriebs drehbar im Gehäuse angeordnet ist, um die Filtereinsätze bzw. Filterkerzen mit einem bodenseitig angeordneten, stationären Rückspülelement rückzuspülen. Der Filterkerzenträger ist derart aufgebaut, dass jede Filterkerze in einer Kammer mit sternförmig verlaufenden Kammerwänden angeordnet ist, damit im Bereich des stationären Rückspülorgans eine vom Filterbetrieb fluidisch abgekoppelte Rückspülzone gebildet wird, in der die Filterkerze mit Druckgas entgegen der Filtrierrichtung rückgespült werden kann. Der Druckgasspeicher und das Rückspül-Schlammablassventil sind übereinander angeordnet, und der Zustrom von Druckgas in die abgedichtete Rückspülkammer und der gleichzeitige Abzug über das Ablassventil wird mittels zweier Ventilkegel gesteuert, die an einem gemeinsamen Kolbenschaft angeordnet sind, um deren Bewegung und Antrieb zu koppeln.

Aufgabe der Erfindung ist es, einen Rückspülfilter der eingangs genannten Art so zu verbessern, daß Probleme mit der Folgesteuerung bei den beiden. Ventilen nicht auftreten können. Dabei soll auch die konstruktive Ausgestaltung des Filters vereinfacht und dessen Bauvolumen bei gleicher Filterleistung möglichst verringert werden.

Diese Aufgabe wird mit der in Anspruch 1 angegebenen Erfindung gelöst. Das Spülventil und das Schlammablaßventil sind von einem gemeinsamen Antrieb betätigbar, wobei das Spülventil die Verbindung zum Filtrat-Anschlußstutzen erst frei gibt, wenn das Schlamm-Ablaßventil die Verbindung zwischen Schlamm-Abzugsstutzen und Schlammauslaß zumindest bereits teilweise freigegeben hat. Besonders vorteilhaft ist dabei, wenn das Spülventil und das Schlamm-Ablaßventil mechanisch miteinander gekoppelt sind.

Die beiden Ventile werden von einem gemeinsamen Antrieb betätigt, so daß es nicht mehr -wie bei der EP 0 361 217 B1 - erforderlich ist, zwei separate Antriebe für die beiden Ventile mittels einer Folgesteuerung zu koordinieren. Die vorzugsweise mechanische Koppelung von Spülventil und Schlamm-Ablaßventil sorgt dafür, daß sich das Spülventil immer zum selben Zeitpunkt nach dem Schlamm-Ablaßventil öffnet, was nach der Erfindung dadurch geschieht, daß das Spülventil und das Schlamm-Ablaßventil Kugelventile sind, wobei das Spül-Kugelventil eine Kugelbohrung hat, die kleiner als die Kugelbohrung des Schlamm-Abzugs-Kugelventils ist.

In diesem Zusammenhang kann es auch vorteilhaft sein, daß das Ventilküken des Schlammablaß-Kugelventils einen größeren Kugeldurchmesser hat als das Ventilküken des Spül-Kugelventils, was unter anderem dann vorteilhaft ist, wenn es darum geht, daß die Ventilküken der beiden Kugelventile bei ihrer Montage oder bei Wartungsarbeiten nicht miteinander vertauscht werden sollen. Die Ventile können eine gemeinsame Antriebswelle haben, werden also beide gleichzeitig und um denselben Winkelbetrag beim Öffnen bzw. Schließen des Ventils verdreht, wobei infolge der größeren Kugelbohrung im Schlammabzugs-Ventil dieses zwangsweise vor dem Spülventil öffnet und somit sich der Druck auf der Schmutzseite der Filtereinsätze bereits auf Umgebungsdruck reduziert hat, bevor die Öffnung des Spülventils erfolgt.

In bevorzugter Weiterbildung eines gattungsgemäßen Rückspülfilters, dem eigenständige, erfinderische Bedeutung zukommt, ist vorgesehen, daß zwischen dem Spülventil und dem Filtrat-Anschlußstutzen eine Beschleunigungsstrecke für Rückspülflüssigkeit vorgesehen ist. Die Beschleunigungsstrecke wird vorzugsweise im wesentlichen von einem einseitig geschlossenen Rohrabschnitt am Rückspülorgan und einem in dieses vorzugsweise konzentrisch hineinragenden Tauchrohr gebildet, das am Filtrat-Anschlußstutzen anschließt. Die in dem geschlossenen Rohrabschnitt bzw. im Tauchrohr befindliche Rückspülflüssigkeit, also Filtrat, wird von dem nach Öffnen des Spülventils ins Rückspülorgan gelangenden Druckgas im geschlossenen Rohrabschnitt nach unten gedrückt und fließt mit hoher Geschwin-durch das in den Rohrabschnitt eintauchende Tauchrohr zum Filtrat-Anschlußstutzen und von dort weiter in die Filtereinsätze. Diese sind vorzugsweise Filterkerzen, die hängend an einer die zugehörige Filterkammer oben begrenzenden Flanschplatte angeordnet sind, die eine oder mehrere Öffnungen zum Filtratraum hin aufweist. Durch die Öffnungen hindurch gelangt die Spülflüssigkeit in die Filterkerzen und durchströmt diese von innen nach außen, wobei die Verunreinigungen, die sich an der Außenseite der Filterkerzen abgelagert haben, gelöst und zum Schlammauslaß durch den Schlamm-Abzugsstutzen und das Schlamm-Ablaßventil transportiert werden.

Nach Beendigung des Rückspülvorgangs werden die beiden Ventile von ihrem gemeinsamen Antrieb wieder geschlossen, woraufhin die rückgespülte Filterkammer vor oder während des sich anschließenden Filtervorgangs entlüftet wird, wozu zweckmäßig ein schwimmerbetätigtes Systementlüftungsventil vorgesehen ist, das als zentrale Schwimmerentlüftung für Kammer und System im oberen Bereich des Filtergehäuses angeordnet sein kann.

Weitere Merkmale und Vorteile der Erfindung ergeben sich aus der nachfolgenden Beschreibung und der Zeichnung, worin eine bevorzugte Ausführungsform der Erfindung anhand eines Beispiels näher erläutert wird. Es zeigt:

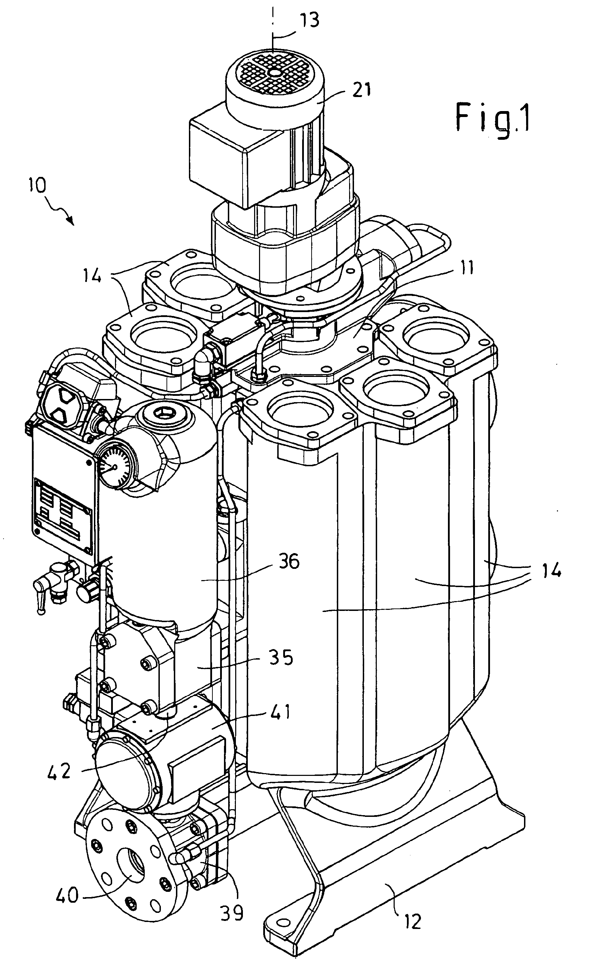

- **Fig. 1**: einen erfindungsgemäßen Rückspülfilter in perspektivischer Darstellung;
- **Fig. 2**: den Gegenstand der Fig. 1 in einem Längsschnitt; und

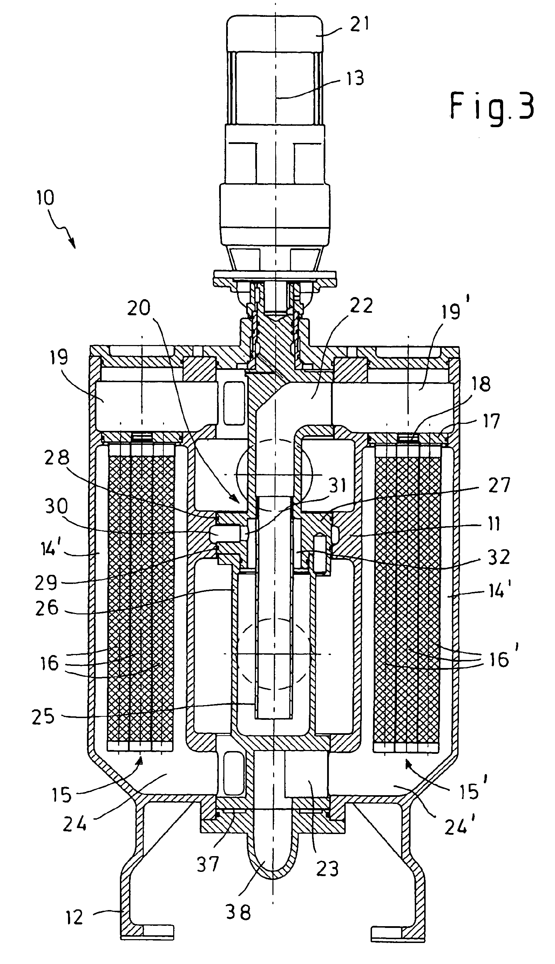

- **Fig. 3**: einen weiteren Längsschnitt durch den erfindungsgemäßen Rückspülfilter, gegenüber der Darstellung nach Fig. 2 um 90° versetzt.

Der in der Zeichnung in seiner Gesamtheit mit 10 bezeichnete Rückspülfilter weist ein zentrales Filtergehäuse 11 auf, das unten mit einem Sockel 12 versehen ist, mit dem der Filter an der hierfür vorgesehenen Stelle befestigt werden kann.

Der Rückspülfilter weist mindestens drei auf einem Kreis um eine zentrale Achse 13 angeordnete Filterkammern 14 auf, die Filtereinsätze 15 aufnehmen. Bei den Filtereinsätzen handelt es sich jeweils um mehrere Filterkerzen 16, die hängend an einer die zugehörige Filterkammer 14 oben begrenzenden Flanschplatte 17 angeordnet sind, wobei die Flanschplatte für jede Filterkerze 16 eine Öffnung 18 aufweist, die das Innere der Filterkerze 16 mit einem oberhalb der Flanschplatte 17 befindlichen Filtrat-raum 19 verbindet.

In dem Filtergehäuse 11 ist ein Rückspülorgan'20 angeordnet, das um die zentrale Achse 13 drehschaltbar gelagert ist. Für den Antrieb des Rückspülorgans sorgt ein Antriebsmotor 21, der auf der Oberseite des Filtergehäuses 11 angeflanscht ist. Das Rückspülorgan weist an seinem oberen Ende einen radial offenen Filtrat-Anschlußstutzen 22 auf, der zur Rückspülung der in jeweils einer Filterkammer 14' eingesetzten Filtereinsätze 15' in Flüssigkeitsverbindung mit dem zugehörigen Filtratraum 19' gebracht wird, indem das Rückspülorgan 20 von dem Antriebsmotor 21 in die entsprechend gewünschte Stellung innerhalb des Gehäuses ausgerichtet wird.

Am unteren Ende des Rückspülorgans 20 ist dieses mit einem Schlamm-Abzugsstutzen 23 versehen, der ebenfalls radial offen ist und in die gleiche Richtung wie der Filtrat-Anschlußstutzen weist, so daß er in Flüssigkeitsverbindung mit dem die Filterkerzen 16' umgebenden Trüberaum 24 der Filterkammer 14' ist, die rückgespült werden soll.

Die Rückspülung der Filtereinsätze der einzelnen Filterkammern erfolgt bei dem erfindungsgemäßen Rückspülfilter mittels druckgasbeaufschlagtem Spülfiltrats. Während des Filtriervorganges und auch unmittelbar vor dem Rückspülvorgang steht das Filtrat in den Filtraträumen 19 oberhalb der Filterkammern 14 sowie auch im Rückspülorgan 20, nämlich im Filtrat-Anschlußstutzen 22, einem sich daran nach unten konzentrisch zur Achse 13 anschließenden Tauchrohr 25 sowie einem dieses umgebenden Rohrabschnitt 26, der an seinem oberen Ende von einem Abschlußflansch 27 verschlossen ist. Der Abschlußflansch 27 ist im Filtergehäuse 11 abgedichtet geführt und weist zwischen seiner oberen und unteren Dichtung 28 bzw. 29 eine umlaufende Nut 30 sowie mehrere Radialbohrungen 31 auf, die die Nut mit einem nach unten zum unteren Rohrabschnitt 26 hin offenen Ringraum 32 verbinden, der das Tauchrohr 25 umgibt. In Höhe der umlaufenden Nut 30 befindet sich im Filtergehäuse 11 die Mündung 33 einer Druckluftleitung 34, die über ein erstes Kugelventil 35 mit einem Druckluftspeicher 36 verbindbar ist.

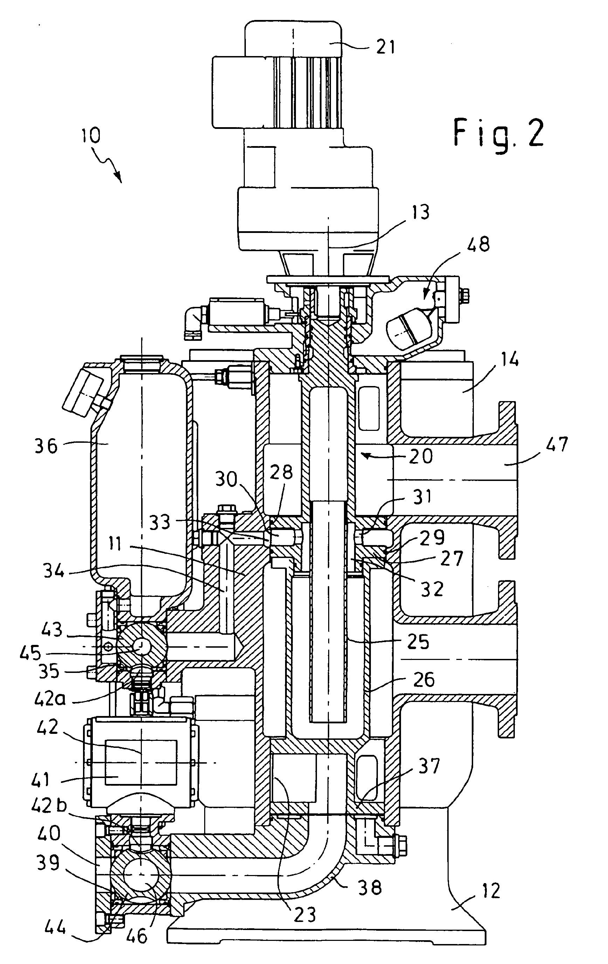

Der Schlamm-Abzugsstutzen 23 am unteren Ende des Rückspülorgans 20 führt über eine Drehflanschverbindung 37 in eine Schlamm-Abzugsleitung 38, die von einem zweiten Kugelventil 39 zu einem Schlammauslaß 40 hin absperrbar ist. Wie am besten aus Fig. 2 ersichtlich ist, sind das ein Spülventil bildende erste Kugelventil 35 und das ein Schlamm-Ablaßventil bildende zweite Kugelventil 39 von einem gemeinsamen Antrieb 41 betätigbar. Dieser weist eine ihn vertikal durchsetzende Antriebswelle 42 auf, die an ihrem oberen Ende 42a drehfest mit dem Kugelküken 43 des Spülventils 35 und mit ihrem unteren Ende 42b drehfest mit dem Kugelküken 44 des Schlamm-Ablaßventils 39 verbunden ist. Die Anordnung ist dabei so getroffen, daß das Kugelküken 43 des Spülventils 35 einen kleineren Außendurchmesser hat als das Kugelküken 44 des Schlamm-Abzugs-ventils 39. Darüber hinaus ist die Kugelbohrung 45 im Kugelküken 43 des ersten Kugelventils 35 kleiner als die Kugelbohrung 46 im Kugelküken 44 des zweiten Kugelventils 39.

Der Rückspülvorgang mit dem soweit beschriebenen Rückspülfilter funktioniert wie folgt:

Zum Rückspülen wird das Rückspülorgan zunächst in die Stellung verdreht, in der der Filtrat-Anschlußstutzen 22 mit dem Filtratraum 19' und der Schlamm-Abzugsstutzen 23 mit dem Trüberaum 24' der Filterkammer 14' verbunden sind, deren Filterkerzen 16' rückgespült werden sollen. Als Rückspülflüssigkeit dient wie bereits erwähnt Filtrat, das zu diesem Zeitpunkt den Filtratraum 19 sowie den Rohrabschnitt 26 und das darin eintauchende Tauchrohr 25 im Rückspülorgan 20 weitgehend vollständig ausfüllt. Anschließend werden über den gemeinsamen Antrieb 41 und deren Antriebswelle 42 gleichzeitig die beiden Kugelküken 43, 44 in ihren Ventilgehäusen gedreht, wobei infolge der größeren Kugelbohrung 46 im Kugelküken 44 des Schlamm-Abzugsventils dieses bereits ein Stück weit öffnet, während das Spülventil mit der kleineren Ventilbohrung noch vollständig geschlossen ist. Sobald das Schlamm-Abzugsventil sich zu öffnen beginnt, baut sich der Flüssigkeitsdruck ab, der bis dahin im Trüberaum 24' der Filterkammer 14' geherrscht hat, deren Filtereinsätze 15' rückgespült werden sollen. Ein Teil der noch nicht gefilterten Flüssigkeit, die im Trüberaum 24' steht, kann dabei über die Schlamm-Abzugsleitung 38 abgeführt werden.

Bei Weiterdrehung der Antriebswelle 42 durch den gemeinsamen Antrieb wird nicht nur das Schlamm-Abzugsventil vollständig geöffnet, sondern dann auch das Spülventil, das dann die Druckluftleitung 34 mit dem Druckluftspeicher 36 verbindet, in dem Druckluft unter deutlich höherem als Atmosphärendruck enthalten ist, die dann schlagartig durch die Druckluftleitung 34 in den Ringraum 32 oberhalb des Rohrabschnitts 26 strömt und dann auf den dort stehenden Filtrat-Flüssigkeitsspiegel wirkt.

Das im Rückspülorgan 20 befindliche Filtrat wird im Rohrabschnitt 26 nach unten und in dem in dieses eintauchenden Tauchrohr 25 nach oben gepreßt und gelangt durch den Filtratraum 19 und die Öffnungen 18 ins Innere der Filterkerzen 16', die es von innen nach außen durchströmt, wobei die an der Außenseite der Filterkerzen anhaftenden Verunreinigungen gelöst werden. Das in den Rohrabschnitt eintauchende Tauchrohr bildet zusammen mit jenem durch den entstehenden U-Rohreffekt eine Beschleunigungsstrecke für die Rückspülflüssigkeit, die somit mit hoher Geschwindigkeit durch das Filtermittel der Filterkerzen strömt. Die von der Außenseite der Filterkerzen so gelösten Verunreinigungen werden über den Schlamm-Abzugsstutzen 23 und die Schlamm-Abzugsleistung 38 durch das zweite Kugelventil hindurch am Schlammauslaß aus dem Filter ausgetragen.

Zur Beendigung des Rückspülvorgangs werden die beiden Kugelventile 35 und 39 wieder geschlossen, wobei das Spülventil 35 wegen seiner kleineren Ventilbohrung 45 vor dem Schlamm-Abzugsventil 39 schließt. Wenn auch das Schlamm-Abzugsventil 39 vollständig geschlossen ist, kann sich der Flüssigkeitsdruck im Trüberaum 24' wieder aufbauen, so daß die Flüssigkeit die Filterkerzen wieder von außen nach innen durchströmen und an den oberen Öffnungen 18 als Filtrat austreten und in die Filterkammer 14' gelangen kann, von wo sie zunächst ins Innere des Rückspülorgans strömt, um dieses wieder zu befüllen. Bei Weiterschalten des Rückspülorgans zur nächsten abzureinigenden Filterkammer wird die Verbindung der Filterkammer 14' mit dem Filtrat-Anschlußstutzen 22 des Rückspülorgans getrennt; das Filtrat strömt dann aus der Filterkammer 14' zu einer Filtratabzugsleitung 47 und von dort zurück zu dem Motor oder der sonstigen Maschine, in der es als Betriebsflüssigkeit eingesetzt wird.

Für eine weitgehend vollständige Entflüftung der Filterkammer nach einem Rückspülvorgang dient bei alledem ein an der Oberseite des Filtergehäuses 11 angeordnetes, schwimmerbetätigtes Systementlüftungsventil 48, das dafür sorgt, daß der Druck im Filtratkreislauf des Rückspülfilter solange nicht größer werden kann als Umgebungsdruck, wie der Flüssigkeitsspiegel unterhalb eines Wertes liegt, bei dem die Filterkammern (noch) nicht wieder vollständig mit Flüssigkeit gefüllt sind.

Man erkennt, daß es aufgrund der besonders einfachen Anordnung der beiden Ventile 35 und 39 und dem für diese gemeinsamen Antrieb ohne aufwendige Steuerungsmechanismen allein aufgrund der unterschiedlichen Ventilbohrungen möglich ist sicherzustellen, daß das Schlamm-Ablaßventil immer vor dem Spülventil öffnet, wenn ein Rückspülvorgang eingeleitet werden soll, so daß das Druckniveau auf der Schmutzseite der rückzuspülenden Filtereinsätze immer bereits abgefallen ist, bevor das für die Rückspülung dienende Filtrat von der Druckluft beaufschlagt und durch die U-förmige Beschleunigungsstrecke gepreßt wird. Hierdurch wird immer ein bestmögliches Reinigungsergebnis erzielt.

## Patentansprüche

1. Rückspülfilter (10) mit mehreren Filterkammern (14), die Filtereinsätze (15) aufnehmen, die mittels druckgasbeaufschlagten Spülfiltrats rückspülbar sind, mit einem Filtergehäuse (11), mit einem Rückspülorgan (20) im Gehäuse (11), das einen Filtrat-Anschlußstutzen (22) und einen Schlamm-Abzugsstutzen (23) aufweist, wobei zur Rückspülung der Filtrat-Anschlußstutzen (22) in Flüssigkeitsverbindung mit einem Filtratraum (19') von jeweils einer der konzentrisch um die Drehachse (13) herum angeordneten Filterkammern (14') und gleichzeitig der Schlamm-Abzugsstutzen (23) in Verbindung mit einem Trüberaum (24') der jeweils einen Filterkammer (14') bringbar ist, mit einem Druckspeicher (36) für Spülgas und einem diesen zum Rückspülorgan (20) absperrenden bzw. freigebenden Spülventil (35) sowie mit einem Schlammauslaß (40) und einem diesen zum Schlamm-Abzugsstutzen (23) absperrenden bzw. freigebenden Schlamm-Ablaßventil (39), wobei das Spülventil (35) und das Schlamm-Ablaßventil (39) von einem gemeinsamen Antrieb (41) betätigbar sind und das das Spülventil (35) die Verbindung zum Rückspülorgan (20) erst freigibt, wenn das Schlamm-Ablaßventil (39) die Verbindung zwischen Schlamm-Abzugsstutzen (23) und Schlammauslaß (40) zumindest bereits teilweise freigegeben hat, **dadurch gekennzeichnet, daß** das Rückspülorgan (20) drehbar um eine Drehachse (13) gelagert ist und dass das Spülventil (35) und das Schlamm-Ablaßventil (39) Kugelventile sind, wobei das Spül-Kugelventil (35) eine Kugelbohrung (45) hat, die kleiner als die Kugelbohrung (46) des Schlammablass-Kugelventils (39) ist.

2. Rückspülfilter nach Anspruch 1, **dadurch gekennzeichnet, daß** das Spülventil (35) und das Schlamm-Ablaßventil (39) mechanisch miteinander gekoppelt sind.

3. Rückspülfilter nach Anspruch 1 oder 2, **dadurch gekennzeichnet, daß** das Ventilküken (44) des Schlammablaß-Kugelventils (39) einen größeren Kugeldruchmesser hat als das Ventilküken (43) des Spül-Kugelventils (35).

4. Rückspülfilter nach einem der Ansprüche 1 bis 3, **dadurch gekennzeichnet, daß** die Ventile (35, 39) eine gemeinsame Antriebswelle (42) haben.

5. Rückspülfilter nach dem Oberbegriff des Anspruchs 1 oder einem der Ansprüche 1 bis 4, **dadurch gekennzeichnet, daß** zwischen dem Spülventil (35) und dem Filtrat-Anschlußstutzen (22) eine Beschleunigungsstrecke (25, 26) für Rückspülflüssigkeit vorgesehen ist.

6. Rückspülfilter nach Anspruch 5, **dadurch gekennzeichnet, daß** die Beschleunigungsstrecke (25, 26) im wesentlichen von einem einseitig geschlossenen Rohrabschnitt (26) am Rückspülorgan (20) und einem in dieses vorzugsweise konzentrisch hineinragenden Tauchrohr (25) gebildet wird, das am Filtrat-Anschlußstutzen (22) anschließt.

7. Rückspülfilter nach einem der Ansprüche 1 bis 6, **dadurch gekennzeichnet, daß** die Filtereinsätze (15) Filterkerzen (16) sind, die hängend an einer die zugehörige Filterkammer (14) oben begrenzenden Flanschplatte (17) angeordnet sind, die eine oder mehrere Öffnung(en) (18) zum Filtratraum (19) hin aufweist.

8. Rückspülfilter nach einem der Ansprüche 1 bis 7, **gekennzeichnet durch** ein schwimmerbetätigtes Systementlüftungsventil (48).

## Claims

1. Backflush filter (10) with several filter chambers (14) which receive filter inserts (15), which can be flushed back by means of a flush filtrate loaded with compressed air, with a filter housing (11), a backflush device (20) within in the housing (11) which comprises a filtrate pipe connection (22) and a mud drain connecting piece (23), whereby, for the backflushing, the filtrate pipe connection (22) can be brought into fluid communication with a filtrate chamber (19') of respectively one of the filter chambers (14') which are arranged concentrically around the rotary axis (13) and simultaneously the mud drain connecting piece (23) can be brought into communication with a mud chamber (24') of the respectively one filter chamber (14'), with a pressure chamber (36) for flush gas and a flush valve (35) closing said pressure chamber or releasing it to the backflush device (20), and with a mud outlet (40) and a mud drain valve (39) closing said mud outlet or releasing it to the mud drain connecting piece (23), wherein the flush valve (35) and the mud drain valve (39) are actuated by a common drive (41) and the flush valve (35) only releases the connection to the backflush device (20) when the mud drain valve (39) has already released the connection between the mud drain connecting piece (23) and the mud outlet (40) at least partially **characterised in that** the backflush device (20) is mounted rotatably around a rotary axis (13), and **in that** the flush valve (35) and the mud drain valve (39) are ball valves, wherein the flush ball valve (35) has a ball bore (45) which is smaller than the ball bore (46) of the mud drain ball valve (39).

2. Backflush filter according to claim 1, **characterised in that** the flush valve (35) and the mud drain valve (39) are coupled to one another mechanically.

3. Backflush filter according to claim 1 or 2, **characterised in that** the valve plug (44) of the mud drain ball valve (39) has a larger ball diameter than the valve plug (43) of the flush ball valve (35).

4. Backflush filter according to one of claims 1 to 3, **characterised in that** the valves (35, 39) have a common drive shaft (42).

5. Backflush filter according to the preamble of claim 1 or any one of claims I to 4, **characterised in that** an acceleration path (25, 26) for backflush fluid is provided between the flush valve (35) and the filtrate pipe connection (22).

6. Backflush filter according to claim 5, **characterised in that** the acceleration path (25, 26) is essentially formed of a tube section (26) closed on one side at the backflush device (20) and a dip tube (25) projecting therein preferably in a concentric manner which is connected to the filtrate pipe connection (22).

7. Backflush filter according to one of claims 1 to 6, **characterised in that** the filter inserts (15) are filter cartridges (16) which are arranged in a suspended manner at a flange plate (17) limiting the associated filter chamber (14) upwardly which comprises one or more opening(s) (18) to the filtrate chamber (19).

8. Backflush filter according to one of claims 1 to 7 **characterised by** a float-actuated system vent valve (48).

## Revendications

1. Filtre à lavage à contre-courant (10) comprenant plusieurs chambres de filtre (14), qui reçoivent des inserts de filtre (15) qui peuvent être lavés à contre-courant au moyen d'un filtrat de lavage sollicité par du gaz sous pression, un boîtier de filtre (11), un organe de lavage à contre-courant (20) dans le boîtier (11), qui présente une tubulure de raccord de filtrat (22) et une tubulure d'évacuation de boue (23), pour le lavage à contre-courant, la tubulure de raccord de filtrat (22) pouvant être amenée en liaison fluidique avec un espace de filtrat (19') depuis chacune des chambres de filtre (14') disposées concentriquement autour de l'axe de rotation (13) et simultanément la tubulure d'évacuation de boue (23) pouvant être amenée en liaison avec un espace turbide (24') de chaque chambre de filtre (14'), un accumulateur de pression (36) pour le gaz de lavage et une soupape de lavage (35) bloquant ou libérant celui-ci vers l'organe de lavage à contre-courant (20), ainsi qu'une sortie de boue (40) et une soupape d'évacuation de boue (39) bloquant ou libérant celle-ci vers la tubulure d'évacuation de boue (23), la soupape de lavage (35) et la soupape d'évacuation de boue (39) pouvant être actionnées par un entraînement commun et la soupape de lavage (35) ne libérant la connexion à l'organe de lavage à contre-courant (20) que lorsque la soupape d'évacuation de boue (39) a au moins déjà partiellement libéré la connexion entre la tubulure d'évacuation de boue (23) et la sortie de boue (40), **caractérisé en ce que** l'organe de lavage à contre-courant (20) est monté à rotation autour d'un axe de rotation (13), et **en ce que** la soupape de lavage (35) et la soupape d'évacuation de boue (39) sont des soupapes sphériques, la soupape sphérique de lavage (35) présentant un alésage sphérique (45) qui est plus petit que l'alésage sphérique (46) de la soupape sphérique d'évacuation de boue (39).

2. Filtre à lavage à contre-courant selon la revendication 1, **caractérisé en ce que** la soupape de lavage (35) et la soupape d'évacuation de boue (39) sont accouplées mécaniquement l'une à l'autre.

3. Filtre à lavage à contre-courant selon la revendication 1 ou 2, **caractérisé en ce que** le boisseau de soupape (44) de la soupape sphérique d'évacuation de boue (39) présente un plus grand diamètre que le boisseau de soupape (43) de la soupape sphérique de lavage (35).

4. Filtre à lavage à contre-courant selon l'une quelconque des revendications 1 à 3, **caractérisé en ce que** les soupapes (35, 39) ont un arbre d'entraînement commun (42).

5. Filtre à lavage à contre-courant selon le préambule de la revendication 1 ou selon l'une quelconque des revendications 1 à 4, **caractérisé en ce qu'**une section d'accélération (25, 26) pour du liquide de lavage à contre-courant est prévue entre la soupape de lavage (35) et la tubulure de raccordement de filtrat 922).

6. Filtre à lavage à contre-courant selon la revendication 5, **caractérisé en ce que** la section d'accélération (25, 26) est formée essentiellement par une portion tubulaire (26) fermée d'un côté au niveau de l'organe de lavage à contre-courant (20) et un tube plongeant (25) pénétrant de préférence concentriquement dans celui-ci, qui se raccorde à la tubulure de raccordement de filtrat (22).

7. Filtre à lavage à contre-courant selon l'une quelconque des revendications 1 à 6, **caractérisé en ce que** les inserts de filtre (15) sont des bougies de filtre (16) qui sont suspendues à une plaque à bride (17) limitant par le haut la chambre de filtre associée (14), qui présente une ou plusieurs ouvertures (18) vers l'espace de filtrat (19).

8. Filtre à lavage à contre-courant selon l'une quelconque des revendications 1 à 7, **caractérisé par** une soupape de ventilation de système (48) actionnée par un flotteur.
